# EUROPÄISCHE PATENTSCHRIFT

(11) **EP 0 811 312 B1**
(45) Veröffentlichungstag und Bekanntmachung des Hinweises auf die Patenterteilung: **21.08.2002**
(21) Anmeldenummer: 97108979.2
(22) Anmeldetag: 04.06.1997
(51) Int. Cl.: A01D 34/00

(54) **Arbeitsgerät, insbesondere Freischneide-Gerät**
Working apparatus especially clearing apparatus
Appareil de travail en particulier débroussailleuse à main

(30) Priorität: 05.06.1996 DE 19622465
(43) Veröffentlichungstag der Anmeldung: 10.12.1997
(73) Patentinhaber: GARDENA Kress + Kastner GmbH, D-89079 Ulm (DE)
(72) Erfinder:
(74) Vertreter: Patentanwälte Ruff, Wilhelm, Beier, Dauster & Partner

(56) Entgegenhaltungen:
- EP-A- 0 005 540
- EP-A- 0 515 909
- DE-B- 1 020 479
- FR-A- 1 450 210
- FR-A- 2 644 031
- US-A- 2 702 978
- US-A- 4 055 890
- US-A- 4 603 478
- US-A- 4 860 451
- US-A- 4 922 577

## Beschreibung

Die Erfindung betrifft ein Arbeitsgerät, insbesondere Freischneide-Gerät nach dem Oberbegriff des Patentanspruches 1.

Solche Geräte können als sogenannte Motorsense ausgebildet sein und zum schneidenden oder schlagenden Trennen von Pflanzenteilen in einer horizontalen Ebene dienen und sind z.B. aus der FR-A-2 644 031 bekannt.

Diese bekannten Geräte bestehen dabei aus einem stangenartigen Träger mit einem am oberen, mit einem Handgriff versehenen Ende angeordneten Antriebsmotor, der über eine durch die hohle Stange hindurch laufende Antriebswelle mit dem Arbeitskopf des Gerätes in Verbindung steht. Der Arbeitskopf ist dabei fest am unteren Ende des stangenartigen Trägers geneigt so befestigt, dass seine Arbeitsebene unter einem Winkel zu der Achse des stangenartigen Trägers verläuft. Die Antriebswelle ist daher über ein flexibles Zwischenglied in der Form einer biegsamen Welle mit dem im Arbeitskopf angeordneten rotierenden Werkzeug verbunden. Eine Lageänderung des Arbeitskopf gegenüber dem Träger ist nicht möglich.

Aus der EP-A-0 515 909 ist es bei einer anderen Bauart bekannt, einen Antriebsmotor unmittelbar dem Arbeitskopf zuzuordnen, so dass am anderen, oberen Ende des Trägers nur ein Griffkopf mit Schaltern erforderlich ist. Solche Bauarten sind jedoch aus ergonomischen Gründen nicht zweckmäßig, weil die Gewichtsverteilung für die Durchführung der gewünschten Arbeiten ungünstig ist. Ein flexibles Zwischenglied für einen durch einen stangenartigen Träger verlaufenden Antrieb ist bei diesen Bauarten nicht notwendig, weil der Antrieb unmittelbar im Arbeitskopf dem Werkzeug zugeordnet ist.

Der Erfindung liegt die Aufgabe zugrunde, ein Arbeitsgerät der eingangs genannten Art, bei dem also der Antrieb durch den Träger hindurch erfolgt, so auszubilden, dass das Gerät unter ergonomischen Gesichtspunkten an die jeweiligen Einsatzverhältnisse angepasst werden kann, so dass zum Beispiel die Arbeitsebene bei annähernd gleicher Griffhaltung durch die Bedienungsperson etwa horizontal oder auch aufrecht verlaufen kann.

Zur Lösung dieser Aufgabe werden bei einem Arbeitsgerät der eingangs genannten Art die kennzeichnenden Merkmale des Patentanspruches 1 vorgesehen.

Durch diese Ausgestaltung ist der Arbeitskopf mit zwei formsteifen Lagergliedern am Trägern bewegbar gelagert, so dass eine Verschwenkung der Arbeitsebene gegenüber der Achse des Trägers möglich ist. Da die Lagerglieder gegeneinander festsetzbar sind, entsteht im festgesetzten Zustand eine starre Verbindung, wobei das Zwischenglied auf die Lageänderungen durch Form- bzw. Krümmungsänderungen reagieren kann.

In Weiterbildung der Erfindung kann vorgesehen werden, dass der in unterschiedlichen Stellungen lageveränderbare Arbeitskopf in mindestens einer Lage über die Lagerglieder starr mit dem Träger verbunden ist und dass die Lagerglieder eine einzige Schwenkachse definieren.

In Weiterbildung der Erfindung kann der Träger im Anschluss an den Arbeitskopf und im Anschluß an ein Befestigungsglied für einen Motor bis zum zugehörigen ersten Lagerglied im wesentlichen biegesteif ausgebildet sein, wobei das zweite Lagerglied permanent starr mit einer Lagerhaltung einer Werkzeuglagerung verbunden ist und die Schwenkachse zur Arbeitsebene etwa parallel sowie zur Längsachse des Trägers etwa rechtwinklig verlaufen kann. Diese Ausgestaltung bringt den Vorteil mit sich, dass das elastische Zwischenglied, welches federnd ausgebildet ist, das Stelllager überbrückt und im wesentlichen in jeder Stellung im Bereich der Schwenkachse liegt.

Der Arbeitskopf umfaßt zweckmäßig den zugehörigen Lagerteil und an diesem ein festsitzendes Lager für das zugehörige Ende der Antriebsverbindung, des Zwischengliedes und/oder des Werkzeuges. Diese sind zweckmäßig teilweise von einem formsteif mit dem zugehörigen Lagerglied verbundenen Gehäuse ummantelt oder abgedeckt, um Verletzungsgefahren z.B. durch den Arbeits- oder Schneidbereich des Werkzeuges zu verringern. Das Werkzeug ist vorteilhaft ein um eine einzige Achse angetrieben drehendes Rotationswerkzeug, das mit seinem Außenumfang in die zu bearbeitenden Teile eingreift und ein Fadenschneider, ein Schlagmesser, eine Säge o. dgl. sein kann. Das Werkzeug bildet das zugehörige Ende des Gerätes.

Unabhängig von der beschriebenen Ausbildung kann eine Sperre zur gegenseitigen Festsetzung der Lagerglieder im Bereich von deren Stell-Lager vorgesehen sein, mit einem Pedal bzw. einer Handhabe zu betätigen sein, vollständig innerhalb des Arbeitskopfes liegen, um die Lagerachse angeordnete und wahlweise in Eingriff zu bringende Sperrflächen aufweisen, unmittelbar oberhalb des Werkzeuges bzw. dessen Lagerung liegen und/oder ein Sperrglied enthalten, das eine Baueinheit mit dem Lagerglied des Trägers bildet. Dadurch kann die Sperre bei sehr kompakter Ausbildung, sicherer Sperrfunktion und hoher Stabilität sehr leicht z.B. dadurch bedient oder ausgerückt werden, daß die Bedienungsperson eine Betätigungstaste in Richtung zur Arbeitsebene nach unten drückt.

Ebenfalls unabhängig von den beschriebenen Ausbildungen wird vorgeschlagen, die Griff-Anordnungen, welche zweckmäßig alle zum Arbeiten mit dem Gerät notwendigen Hand- und Traggriffe enthält, an einem Abschnitt des Trägers lagefest vorzusehen, welcher gegenüber dem mit dem Arbeitskopf starr oder über das Stell-Lager verbundenen Trägerabschnitt verstellbar ist. Die Verstellung kann zur Verkürzung und Verlängerung des Trägers parallel zu diesem gerichtet sein. Sie kann auch um eine zu dieser Verstellrichtung etwa parallele Achse drehend vorgesehen sein, z.B. um mindestens 90 oder 180°, um den Träger bei etwa gleicher Griffausrichtung in entgegengesetzte Neigungslagen überführen zu können. Vorteilhaft ist das dem Motor zugeordnete Ende der Antriebsverbindung axial gegenüber dem zugehörigen Ende des unteren Trägerabschnittes permanent festsitzend angeordnet, so daß der Stator des Motors starr an diesem Trägerende befestigt werden kann und sich mit diesem gegenüber der Griffanordnung verstellen läßt.

Die Griffanordnung kann an dem gegenüber dem Stielabschnitt des Trägers erweiterten Griff-Kopf lagestarr oder in einteiliger Verbindung angeordnet sein. Dieser Kopf kann auch den Motor, Steuerglieder, stromführende Teile o. dgl. im Inneren aufnehmen, so daß der Motor, das zugehörige Kupplungsglied und das zugehörige Ende des unteren Trägerabschnittes in dem Gehäuse längsverstellbar sowie drehbar angeordnet sind. Dadurch bilden diese Teile mit dem Gehäuse eine Teleskop-Einheit.

Auch kann die Griffanordnung in wenigstens einer Lage im Bereich des Motors, mit größerer Entfernung vom Arbeitsbereich als das untere Ende des Motors und/oder zwischen dessen Enden an den Träger anschließen, so daß sich sehr günstige Kräfteverhältnisse ergeben. Die Griff-Anordnung bzw. ein Griff kann auch annähernd an das vom Arbeitskopf entfernte Ende des Trägers anschließen. Der jeweilige Griff ist zweckmäßig so ausgebildet, daß er mit den Fingern einer Hand umklammert und ggf. gleichzeitig ein Betätigungsschalter für den Antrieb oder Motor betätigt werden kann.

Ebenfalls unabhängig von der beschriebenen Ausbildung ist es zweckmäßig, wenn zwei Griffe gegeneinander in unterschiedliche Lagen verstellbar sind. Nur ein Griff kann dabei unmittelbar an den Mantel des Trägers anschließen und den anderen Griff frei tragen. Der letztgenannte Griff ist über ein Lager mit dem ersten Griff verbunden, das eine einzige definierte Schwenkachse aufweisen kann, von welcher beide Griffe stets gleichen Abstand haben. Dadurch ist eine sehr einfache Griff-Einheit geschaffen, welche auch das Kopf- bzw. Motorgehäuse enthalten kann und an der Außenseite von dessen Mantel liegt.

Diese und weitere Merkmale gehen außer aus den Ansprüchen aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: ein erfindungsgemäßes Gerät in Seitenansicht auf die Griff-Anordnung und
- Fig. 2: das Gerät gemäß Fig. 1 in wesentlich vergrößerter Darstellung sowie in einer anderen gegenseitigen Einstellung der Geräte-Köpfe.

Das Gerät 1 weist einen über den größten Teil seiner Länge reichenden, formsteifen sowie langgestreckten Träger 2 auf. An einem bzw. unteren Ende trägt der Träger 2 als Fortsetzung einen Arbeits-Kopf 3. Am anderen, oberen Ende bildet der Träger 2 einen weiteren Kopf 4. Die beiden Köpfe 3, 4 sind über einen Stiel 5 mit durchgehend konstanter Außenweite verbunden, gegenüber welchem die Köpfe 3, 4 wesentlich größere Außenweite haben. Der Träger 2 weist zwei in Längsrichtung aneinander schließende sowie einander übergreifende Träger-Abschnitte 6, 7 auf, welche gegeneinander in ihrer Längsrichtung sowie um ihre gemeinsame Achse 51 jeweils stufenlos verstellbar und in jeder beliebigen Stellung festsetzbar sind.

Der Kopf 3 ist gegenüber dem Träger 2 ebenfalls stufenlos oder in Stufen mit einer Stellvorrichtung dadurch verstellbar, daß er mit einem Gelenk 10 an dem vom Kopf 4 entfernten Ende des Abschnittes 5, 7 angelenkt ist. Dieses Ende ist durch einen Gelenk-Kopf 8 gebildet, welcher um eine einzige Achse 11 schwenkbar in einen Gelenk-Kopf 9 des Kopfes 3 eingreift. Die Achse 11 liegt rechtwinklig zur Achse 51. Die beiden Köpfe 3, 4 bzw. 8 sind im Arbeitszustand ausschließlich über ein Rohr 53 von durchgehend konstanten Querschnitten fest miteinander verbunden, welches den Stiel 5 bildet. In das Innere der Köpfe 4, 8 ist dabei das Rohr 53 mit seinen Enden eingesteckt und am Kopf 8 oder 9 permanent starr festgelegt. Der Kopf 3 weist einen formsteifen Basiskörper 12 auf, welcher starr bzw. einteilig mit dem Kopf 9 verbunden ist. Der Träger 2 bzw. seine Abschnitte 4 bis 8 liegen gemeinsam und durchgehend geradlinig in der Achse 51.

Ein Antrieb 13 für das Gerät 1 enthält im Abstand vom Kopf 3, 8 bzw. 9 beim Kopf 4 einen Motor 14, wie einen Verbrennungsoder Elektromotor mit drehender Ausgangswelle. Von dieser wird vom Kopf 4 aus eine bis in die Köpfe 3, 8, 9, 12 reichende Antriebs-Verbindung 15 angetrieben. Die Verbindung 15 enthält eine unmittelbar mit der Motorwelle getriebefrei gekuppelte, starre Welle 16, die wie der Trägerteil 5 nur in die Köpfe 4, 8 hineinragt. Das eine Ende der durchgehend konstant rohrförmigen Welle 16 ist drehfest, jedoch, z.B. über eine Kerbverzahnung, zum Ausgleich von Fertigungstoleranzen oder Wärmedehnungen längsverschiebbar mit dem einen Ende eines flexiblen oder elastischen Zwischengliedes 17, nämlich einer biegsamen, gekrümmten Welle, gekuppelt. Das andere Ende der Welle 17 ist mit einer starren Welle 18 gekuppelt, deren Achse 54 in jeder Gelenkstellung unter einem stumpfen Winkel zur Achse 51 und mit dieser in einer gemeinsamen, zur Achse 11 rechtwinkligen Axialebene liegt. In den beiden Achsen 51, 54 liegen auch die Enden der Welle 17, die durch formsteife Wellenabschnitte, beispielsweise Hülsen, gebildet sein können, in die die Enden des flexiblen Wellenteiles eingesteckt und starr befestigt sind. Die beiden Enden der Welle 17 sind mit diesen Wellenabschnitten in feststehend angeordneten Lagern 19, 21, wie Wälzlagern, drehbar gelagert. Die zugehörigen Wellen 28, 18 durchsetzen das jeweilige Lager 19, 21, das festsitzend am Kopf 8 bzw. 12 angeordnet ist. Der Wellenabschnitt 28 ist unmittelbar mit dem Ende der Welle 16 gekuppelt und das freie Ende des Wellenabschnittes 18 dient unmittelbar zur drehfesten Aufnahme des Kopf- bzw. Grundkörpers eines Werkzeuges 20. Das Werkzeug 20 dreht um die Achse 54 und arbeitet in einer zur Achse 54 rechtwinkligen Arbeitsebene 52, gegenüber welcher die Achse 51 in jeder Stellung unter einem spitzen Winkel liegt. Gegenüber der Ebene 52 und dem Träger 2, 8 ist die Achse 11 stets lagefest. Mit dem Gelenk 10 wird der Kopf 3 gegenüber dem Motor 14 verstellt.

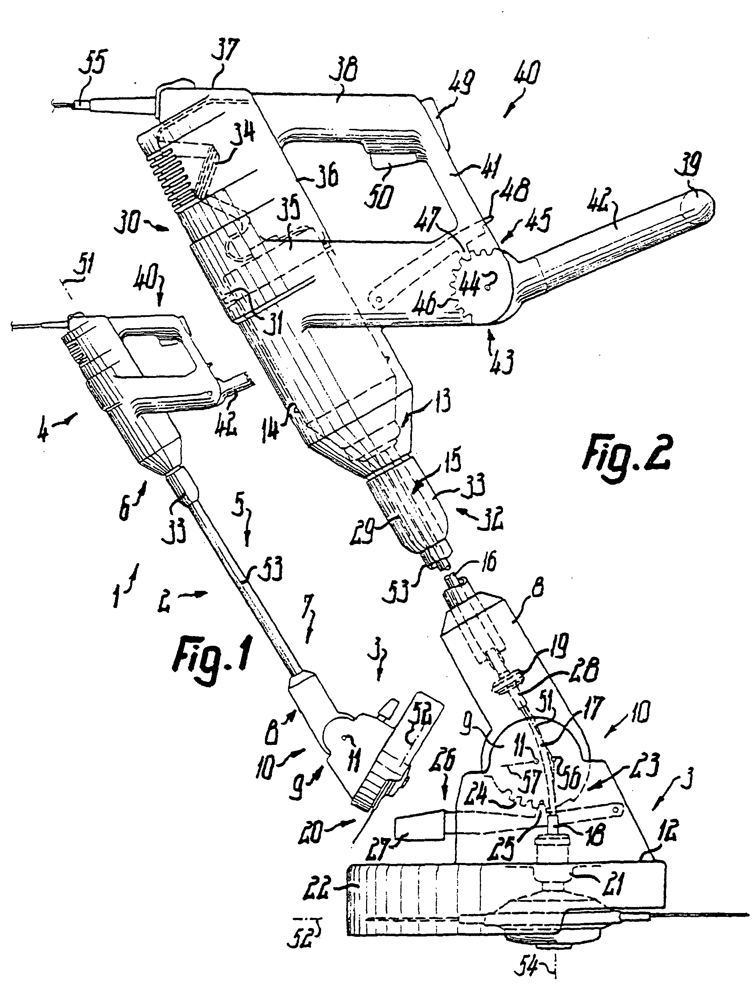

Die Achsen 51, 54 haben in einem Bereich bzw. an einer Schnittstelle 56 den geringsten Abstand voneinander. In der gemäß Fig. 2 am geringsten gekrümmten Stellung des Zwischengliedes 17 verläuft dessen Mittelachse zwischen dem Schnittpunkt 56 und dem Schwenkzentrum 11, wobei diese Mittelachse geringfügig näher beim Schnittpunkt 56 als bei der Achse 11 liegen kann. Während des stärkeren Krümmens des Zwischengliedes 17 bei der Schwenkung des Kopfes 3 kann die Mittelachse des Zwischengliedes in der Mitte von dessen krümmbarer Länge eine Schnittlage mit der Achse 11 überlaufen und in der am stärksten gekrümmten Stellung auf der vom Schnittpunkt 56 abgekehrten Seite der Achse 11 liegen, jedoch von dieser einen Abstand haben, der kleiner als der Abstand in der zuerst genannten Stellung ist. Der Schnittpunkt 56 läuft dabei entlang der Achse 54 von der Arbeitsebene 52 weg. Die gemeinsame Axialebene 57 der Achse 11 und des Schnittpunktes 56 liegt stets unter spitzen Winkeln zu den Achsen 51, 54 und in dieser Ebene 57 kann der Krümmungsradius des Zwischengliedes 17 liegen. Die Länge der neutralen bzw. zentralen Faser des Zwischengliedes 17 ist stets im wesentlichen konstant und der Krümmungs-Mittelpunkt des Zwischengliedes 17 kann in dessen gestrecktester Stellung außerhalb des Kopfes 3 bzw. in der am stärksten gekrümmten Stellung innerhalb des Außenumfanges des Kopfes 3 mit jeweiligem Abstand zwischen der Arbeitsebene 52 und einer dazu parallelen Axialebene der Achse 11 liegen. In der gestrecktesten Stellung ist der Krümmungsradius des Gliedes 17 mindestens 1,5- bis 2-fach größer als dessen biegsame Länge und in der am stärksten gekrümmten Stellung um mindestens ein Viertel oder höchstens die Hälfte bzw. ein Drittel kleiner als diese Länge. Durch diese Anordnung sind Längenänderungen der biegsamen Welle beim Schwenkvorgang äußerst gering und die Betriebssicherheit sehr hoch.

Der Kopf 3 bzw. 12 trägt das Lager 21 lagestarr und bildet ein haubenförmiges Gehäuse 22, in welchem das Werkzeug 20 wenigstens teilweise geschützt liegt, nämlich an der Oberseite und am Umfang abgeschirmt ist. Das flach tellerscheibenförmige Gehäuse 22 trägt an seiner oberen Deckwand den Kopf 9, der rechtwinklig zur Achse 11 flach stegförmig sowie einteilig mit dem Gehäuse 22 ausgebildet ist. Die Dicke dieses Steges ist kleiner als ein Fünftel der größten Weite des Gehäuses 22, so daß sich eine sehr leichte Bauweise ergibt. Der Kopf 9 bildet Seitenwangen, zwischen die der entsprechend plattenförmige Kopf 8 mit einer Gelenkscheibe axialspielfrei gesichert so eingreift, daß er über einen durch Anschlag begrenzten Winkel von weniger als 120 oder 90°, insbesondere etwa 60°, schwenkbar ist.

Die beiden Köpfe 8, 9 bzw. 3, 4 sind mit einem Gesperre 23 in der jeweiligen Neigungslage um die Achse 11 gegeneinander formschlüssig festsetzbar. Die Sperre 23 weist zwei ausrückbar ineinandergreifende Sperrglieder 24, 25 auf. Ein Sperrglied 24 ist unmittelbar durch den Kopf 8 bzw. dessen Gelenkscheibe gebildet und als vollständig innerhalb des Kopfes 9 um die Achse 11 liegender Zahnkranz an der Gelenkscheibe gebildet. Das andere Sperrglied 25 greift jeweils in eine Zahnlücke der Zahnung ein und ist zur Sperrstellung federbelastet. Es liegt auf der der Ebene 52 zugekehrten Seite des Kopfes 8 innerhalb des Kopfes 9, 12 und ist an einem einarmigen Schwenkhebel angeordnet, mit dem es einteilig ausgebildet sein kann. Der Schwenkhebel liegt ausschließlich zwischen dem Gehäuse 22 und dem Kopf 8 innerhalb des Kopfes 9.

Der Kopf 9 liegt näher beim vorderen, das Werkzeug 20 freigebenden Ende des Gehäuses 22 als bei dessen hinteren Ende, so daß dieses hintere Ende über den Kopf 9 parallel zur Ebene 52 vorsteht. Der Sperrhebel ragt oberhalb des Kopfes 22 nach hinten aus dem Kopf 9 parallel zur Ebene 52 heraus und bildet hier eine Betätigung 26, nämlich eine Taste 27, die als Pedal mit dem Fuß oder von Hand betätigt werden kann. Zum Ausrücken der Sperre 23 wird das Pedal 27 bis zum Anschlag auf der Deckwand des Kopfes 22 nach unten gedrückt. Bei Freigabe springt die Betätigung 26 mit dem Sperrglied 25 von selbst zurück in die Sperrlage. Die Zahnung erlaubt eine Verstellung in Schritten von mehr als 5 bzw. 10°, insbesondere von 15°.

Die Betätigung 26 liegt im einspringenden Winkel zwischen der Achse 51 und der Ebene 52 sowie oberhalb dieser Ebene.

Die Figuren 1 und 2 zeigen das Gerät 1 in Ansicht parallel zur Achse 11 bzw. rechtwinklig zur gemeinsamen Axialebene der Achsen 51, 54 sowie in der steilsten Lage der Achse 51 gegenüber der Achse 54 bzw. der Ebene 52, in welcher der entsprechende Winkel 60° betragen kann. Gemäß Fig. 2 liegt die Achse 11 mit geringem Abstand unmittelbar benachbart zur Krümmungsinnenseite der Welle 17 bzw. von deren Achse, die in dieser Stellung ihre geringste Krümmung aufweist. In der anderen Endstellung der Stellvorrichtung 10 liegt die Achse 11 entsprechend benachbart an der anderen, äußeren Krümmungsseite der Welle 17 oder von deren Mittelachse, die dann ihre stärkste Krümmung hat. In jeder Stellung liegt die Achse 11 in der Mitte der Länge der Welle 17. Die Welle 17 liegt ausschließlich innerhalb der Köpfe 8, 9. Dadurch hat die Welle 17 eine sehr geringe Länge, die gegenüber ihrem kleinsten Krümmungsradius höchstens 2- oder 1½-fach größer ist. Diese Länge ist wesentlich kleiner als der größte Krümmungsradius, z.B. kleiner als zwei Drittel davon.

Die Welle 16 ist ausschließlich im Lager 19 innerhalb des Kopfes 8 sowie innerhalb des Motors 14 durch dessen Wellenlagerung gelagert und erstreckt sich dazwischen entweder lagersowie berührungsfrei innerhalb des Schutzmantels 53 oder, bei größerer Länge des Schutzmantels, etwa auf dessen halber Länge mittels eines Stützlager abgestützt, um eine Durchbiegung der Welle 16 zu vermeiden. Die Enden des Schutzmantels 53 sind einerseits im Kopf 8 und andererseits im Motor 14 an dessen Stator starr so festgelegt, daß der Abstand des Motors 14 vom Kopf 8, 9, 12, 22 stets konstant ist. Der Trägerteil 4, 6 ist mit einer einzigen Führung 29 an dem Trägerteil 5, 7, 8, 9, 12, 22 entlang der Achse 51 verschiebbar sowie um die Achse 51 drehbar gelagert, so daß die Länge der Verbindung 5 sowie die gegenseitige Drehlage der Köpfe 3, 4 bzw. 6, 7 verändert werden kann. Das zugehörige Ende des Abschnittes 7 bildet hierfür eine bewegbare Einheit, die verschieb- und drehbar in den Abschnitt 4, 6 eingreift und vollständig innerhalb dieses Abschnittes 4, 6 liegt. Die bewegbare Einheit umfaßt das zugehörige Ende des Rohres 53 und der Welle 16, den Motor 14, eine mehrlitzige Versorgungsleitung 34 für den Motor 14, eine Kühlvorrichtung, wie ein Gebläse 35 für den Motor 14 o. dgl. Der Abschnitt 4, 6 ist im wesentlichen ausschließlich durch ein Gehäuse 30 bzw. einen Schutzmantel 36 sowie die zugehörigen Teile 33 einer Sperre 32 gebildet, welche die genannten Teile der bewegbaren Einheit im Inneren vollständig umschlossen aufnehmen. Im Abstand von der Führung 29 kann innerhalb des Schutzgehäuses 30 noch eine weitere Hilfs-Führung 31 vorgesehen sein, beispielsweise vom Mantel 36 nach innen vorstehende Gleitnocken, an welchen der Motor 14 mit seinem Außenumfang verschiebbar und drehbar gleitet.

Die Führung 29, welche mit ihren Führungsflächen auch die Sperrflächen der Sperre 32 bildet, bildet das der Ebene 52 zugekehrte Ende des Abschnittes 4, 6 und dieses Ende liegt in der längsten Einstellung des Stieles 5 unmittelbar benachbart zum zugehörigen Ende des Motors 14. Die Führung 29 weist am Ende des Kopfkörpers 30 einen starr bzw. einteilig vorstehenden, hülsenförmigen Führungsabschnitt auf, welcher unmittelbar auf dem Außenumfang des Rohres 53 gleitet und an seinem Außenumfang mit einem Stellglied 33 über ineinandergreifende Gewinde in Eingriff steht. In das freie, mit einem Innenkonus versehene Ende des Führungsabschnittes greift eine Spannhülse mit einem komplementären Außenkonus ein, die mit der Schraubhülse 33 axial verstellbar und dadurch unmittelbar gegen den Außenumfang des Rohres 53 radial zu spannen ist. Der Außenumfang der Innengewinde-Hülse 33 bildet die Handhabe zum Lösen und klemmenden Festsetzen der Sperre 32.

Nach dem Lösen der Sperre 32, die vom Rohr 53 vollständig durchsetzt ist, kann der Abschnitt 4, 6 in der beschriebenen Weise auf dem Rohr 53 bzw. dem Motor 14 verschoben werden, bis beim Verkürzen Anschläge an dessen vorderen bzw. unteren Ende an den Gegenanschlägen 31 anschlagen. Die rückfedernd streck- und verkürzbare Versorgungsleitung 34 liegt dann als ebene Spirale zwischen den zugehörigen Enden des Motors 14 und des Gehäuses 30 innerhalb von diesem. Dieses Ende des Motors 14 ist durch das Gebläse 35 gebildet, das in dieser Stellung im Bereich von Belüftungsöffnungen im Mantel 36 des Kopfes 4 liegt, so daß auch die Leitung 34 stets sehr gut der Gebläseluft ausgesetzt und gekühlt ist. Der axiale Hub dieser Stellvorrichtung beträgt zweckmäßig mindestens 50 oder 90 mm und höchstens 200 bzw. 150 oder 120 mm. Bei gelöster Sperre 32 kann der Abschnitt 4, 6 auf dem Rohr 53 und dem Motor 14 auch anschlagbegrenzt über höchstens 270°, insbesondere 180°, verdreht und dann wieder stufenlos gesperrt werden, wobei die Wendel- bzw. Spiralform der Leitung 34 entsprechend verengt oder erweitert wird. Auch die Drehverstellung ist mit der Sperre 32 stufenlos festsetzbar.

Das Gerät 1 ist dafür geeignet mit oder ohne Schulterriemen frei mit beiden Händen vollständig vor dem Körper der Bedienungsperson getragen und dabei wie eine Sense in schwingenden Bewegungen des Kopfes 3 frei mit konstantem Abstand über dem Boden hin und her bewegt werden zu können, ohne daß es unmittelbar am Boden abgestützt ist. Hierzu ist am Kopf 4 eine Griff-Anordnung 40 mit zwei Griffen 38, 39 vorgesehen, die jeweils mit den Fingern einer Hand zu umklammern sind. Die Griffe 38, 39 sind so angeordnet, daß sie für Links- und Rechtshänder gleich gut zu gebrauchen sind. Sie liegen annähernd symmetrisch zu der Axialebene 51 bzw. 54. Der von der Ebene 52 weiter entfernte Griff 38 schließt unmittelbar an das hintere oder obere Ende 37 des Abschnittes 4, 6, 30 an und steht stabartig von der Außenseite des Mantels 36 etwa radial zur Achse 51 ab. Die Mittelachse des Griffes 38 schließt mit der Achse 51 einen spitzen, sich zur Ebene 52 öffnenden Winkel ein. Der Griff 38 ist durch den einen Seitenschenkel eines gemäß Fig. 2 U-förmigen Bügels 41 gebildet, dessen Quersteg parallel zur Achse 51 im Abstand vom Mantel 36 liegt. Der zweite Seitenschenkel des Bügels 41 schließt etwa parallel zum Griff 38 an den Mantel 36 im Bereich des Motors 14 an. In Ansicht auf den Quersteg des Bügels 41 bzw. von rechts gemäß Fig. 2 ist der Quersteg zur Ebene 52 in der Breite dreieckförmig etwa auf die Außenweite des Mantels 36 erweitert, wobei er im erweiterten Bereich in den anderen Seitenschenkel übergeht, der beiderseits der Achse 51 an den Außenumfang des Mantels 36 anschließt. Der zweite Seitenschenkel ist gegenüber dem Griff 38 zur Ebene 52 versetzt, jedoch gegenüber dem zugehörigen Ende des Abschnittes 4, 6 bzw. der Einheiten 30, 32 zurückversetzt, so daß er etwa in der Mitte der Länge des Gehäuses 30 liegt.

Der andere, stabförmige Griff 39 liegt quer bzw. rechtwinklig zum Griff 38 oder zur genannten Axialebene 51, 54 parallel zur Achse 11, sofern sich die Anordnung 40 in einer der genannten Endstellungen befindet. Der Abstand des Griffes 39 von der Achse 51 und vom Mantel 36 ist größer als der des Griffes 38. Der Griff 39 befindet sich in Gebrauchsstellung zwischen den zur Achse 51 rechtwinkligen Begrenzungsebenen der Enden der Einheiten 4, 6 bzw. 30, 32. Der Griff 39 ist durch den Quersteg eines U-förmigen Bügels 42 gebildet, der in einer zum Bügel 41 quer oder rechtwinklig liegenden Ebene vorgesehen und mit den Enden seiner Schenkel am Bügel 41 festgelegt ist. Der Bügel 42 schließt mit seinen gegen die Achse 51 gerichteten Schenkelenden im Übergangsbereich zwischen dem Quersteg und dem zweiten Seitenschenkel an den Bügel 41 an. Während der Bügel 41 in einer Axialebene der Achse 51 bzw. 54 liegt, liegt der Bügel 42 in der Gebrauchsstellung in einer zu dieser Axialebene quer oder rechtwinklig liegenden Ebene.

Der Griff 39, 42 ist in unterschiedliche Gebrauchsstellungen überführbar, einerseits um ihn ergonomisch an die jeweilige Bedienungsperson anzupassen und andererseits um ihn in eine Nichtgebrauchs- bzw. Aufbewahrungs-Stellung zu überführen, in welcher der Griffkörper 42 als Verlängerung des Quersteges des Bügels 41 am nächsten bei der Achse 51 sowie etwa parallel zu dieser liegt und gegen die Ebene 52 frei vorsteht. Zur Verstellung ist eine Stellvorrichtung bzw. ein Gelenk 43 vorgesehen, dessen Achse 44 rechtwinklig zur genannten Axialebene der Achse 51 bzw. 54 bzw. des Griffes 38 oder des Bügels 41 liegt. In den beiden Endstellungen liegen die Achsen 11, 44 parallel zueinander. Die Achse 44 liegt mit Radialabstand außerhalb der Achse 51 bzw. des Mantels 36 oder des Griffes 38 und ist gegenüber dem Griff 38 zur Ebene 52 versetzt. Der Griff 39 kann dadurch auch in Verlängerung des Griffes 38 oder näher bei der Ebene 52 als der Bügel 41 liegen.

Die am Abschnitt 4, 6 bzw. 30 um die einzige Achse 44 gelagerten Schenkelenden des Bügels 42 sind einschließlich des Griffes 39 mit einer Sperre 45 in Winkelschritten von weniger als 30, 20 oder 15°, insbesondere von 10°, festsetzbar, so daß sich eine praktisch stufenlose Einstellung ergibt. Die Sperrglieder der Sperre 45 enthalten um die Achse 44 ein unmittelbar durch die Schenkelenden des Bügels 42 gebildetes Zahnsegment 46 und einen in dessen Zahnlücken eingreifenden Sperrnocken 47, der an einem Schwenkhebel angeordnet ist und oberhalb des Segmentes 46 liegt. Der einarmige Hebel ist um eine zur Achse 44 parallele Achse am Abschnitt 4, 6, 30 bzw. am zugehörigen Seitensteg des Bügels 41 schwenkbar gelagert, muß zum Ausrücken wie seine Handhabe 48 von der Ebene 52 weg angehoben werden und kehrt zur Sperrstellung durch Federbelastung von selbst zurück. Das Betätigungsglied 48 liegt an der Außenseite des Quersteges des Bügels 41 unmittelbar oberhalb des Bügels 42 frei zugänglich. Alle übrigen Teile 46, 47 der Sperre 45 liegen vollständig innerhalb des gehäuseartigen Bügels 41, wobei das Glied 48 durch das freie Ende des Sperrhebels bzw. des Trägers des Nockens 47 gebildet und einteilig mit diesem ausgebildet ist. Der Bügel 42 kann auch durch einen geschlossenen, beispielsweise rechteckigen, Rahmenkörper gebildet sein. Einen entsprechenden Rahmenkörper bildet der Bügel 41 auch mit dem Mantel 36.

Die Handhabe 38, 41 ist lagestarr dadurch mit dem Abschnitt 4, 6, 30, 36 verbunden, das sie einteilig mit diesem bzw. mit dem Mantel 36 des Gehäuses 30 ausgebildet ist. Dieser Mantel 36 ist zweckmäßig wie der Griff 38, 41 durch zwei Schalenkörper gebildet, welche in der genannten zur Zeichenebene parallelen Axialebene der Achse 51 bzw. 54 geteilt und jeweils einteilig mit einem Seitenteil des Griffes 38, 41 ausgebildet sind. Der Bügel 42 kann durchgehend einteilig ausgebildet sein. Im Übergangsbereich zwischen dem Griff 38 und dem Quersteg des Bügels 41 ist an der Außenseite des Quersteges eine mit dem Daumen niederzudrückende Betätigungs- bzw. Einschalttaste 49 vorgesehen, durch welche der Antrieb 13, 14 angeschaltet wird. Im selben Übergangsbereich ist an der Innenseite des Griffes ein Betätigungsglied bzw. eine Taste 50 vorgesehen, welche nur dadurch im Sinne des Einschaltens des Antriebes 13, 14 niedergedrückt werden kann, daß die Hand den Griff 38 umklammert. Sobald diese Umklammerung aufgehoben wird, kehrt die Taste 50 in ihre Ausschaltstellung zurück und der Antrieb 13, 14 ist auch dann abgeschaltet, wenn die Taste 49 in Einschaltstellung steht. Dem Griff 39 braucht dadurch keinerlei Ein- und Ausschaltglied für den Antrieb zugeordnet sein. Die Leitung 34 durchsetzt den Griff 38 und wird über die den Tasten 49, 50 zugehörigen Schalter oder Kontakte gesteuert.

Die Versorgungs-, Geräte- bzw. Netzleitung 55 für den Motor 14 und die zuletzt genannten Schalter schließt auf der von der Anordnung 40, 38, 39 abgekehrten Seite an das Ende 37 des Abschnittes 4, 6, 30 an und steht entgegengesetzt zum Griff 38 sowie etwa mit diesem quer von der Achse 51 ab. Beim Greifen des Griffes 38 kann der Unterarm an der Endfläche 37 abgestützt werden, ohne daß die flexible Leitung 55 stört. In den Figuren 1 und 2 sind der Arbeitskopf 3 und der Griffkopf 4 in den beiden, zueinander um die Achse 51 um 180° verstellten Gebrauchsstellungen dargestellt, wobei bei gleicher geneigter Haltung des Gerätes 1 gemäß Fig. 2 die Arbeitsebene 52 etwa horizontal und gemäß Fig. 1 schräg aufrecht liegt. Alle angegebenen Wirkungen und Eigenschaften, wie Lagebestimmungen, können genau wie beschrieben oder nur ungefähr wie beschrieben bzw. stark abweichend davon vorgesehen sein. Das Werkzeug 20 bildet hier einen Fadenschneider, dessen durch Zentrifugalkraft radial zur Achse 54 gestreckte, flexible Schneidfäden als rotierende Trennmesser dienen, vom Grundkörper des Werkzeuges frei abstehen und bei Verkürzung durch Abnutzung aus dem Werkzeugkörper heraus so nachgestellt werden können, daß sie ihre vorbestimmte Gebrauchslänge haben.

## Patentansprüche

1. Arbeitsgerät, insbesondere Freischneide-Gerät, mit einem an einem Träger (2) angeordneten Arbeitskopf (3) zur Aufnahme eines eine Arbeitsebene (52) definierenden Werkzeuges (20) und mit einer sich vom Träger (2) zum Arbeitskopf erstreckenden Antriebsverbindung (15) für den Arbeitskopf (3), die ein flexibles Zwischenglied (17) umfasst, wobei zwischen dem Träger (2) und dem Arbeitskopf (3) eine Verbindung (10) vorgesehen ist, **dadurch gekennzeichnet, dass** die Verbindung ein Stelllager (10) umfasst, das den Arbeitskopf (3) an dem Träger (2) mit zwei gesonderten ersten und zweiten Lagergliedern (8, 9) lagert, und dass die ersten und zweiten Lagerglieder (8, 9) um eine Schwenkachse (11) gegeneinander bewegbar unmittelbar ineinander greifen und in der jeweilig eingestellten Lage gegeneinander festsetzbar sind.

2. Arbeitsgerät nach Anspruch 1, **dadurch gekennzeichnet, dass** der in unterschiedlichen Stellungen lageveränderbare Arbeitskopf (3) in mindestens einer Lage über die Lagerglieder (8, 9) starr mit dem Träger (2) verbunden ist, und dass die Lagerglieder (8, 9) eine einzige Schwenkachse (11) definieren.

3. Arbeitsgerät nach Anspruch 1 oder 2, **dadurch gekennzeichnet, dass** der Träger (2) im Anschluss an den Arbeitskopf (3) und im Anschluss an ein Befestigungsglied für einen Motor (14) bis zum zugehörigen ersten Lagerglied (8) im wesentlichen biegesteif ausgebildet ist, dass das zweite Lagerglied (9) permanent starr mit einer Lagerhaltung einer Werkzeug-Lagerung (21) verbunden ist, und dass die Schwenkachse (11) zur Arbeitsebene (52) etwa parallel sowie zur Längsachse des Trägers (2) etwa rechtwinklig verläuft.

4. Arbeitsgerät nach einem der vorhergehenden Ansprüche, **dadurch gekennzeichnet, dass** das elastische Zwischenglied (17) federnd ausgebildet ist, dass das Zwischenglied (17) das Stelllager (10) überbrückt, und dass das Zwischenglied (17) im wesentlichen in jeder Stellung im Bereich der Schwenkachse (11) liegt.

5. Arbeitsgerät nach einem der vorhergehenden Ansprüche, **dadurch gekennzeichnet, dass** eine Sperre (23) für das Stelllager (10) in dessen Bereich vorgesehen ist, dass ein Sperrglied (25) am zweiten Lagerglied (9) gelagert ist sowie unmittelbar in das erste Lagerglied (8) eingreift, und dass die Sperre (23) mit einem Pedal (27) betätigbar ist.

6. Arbeitsgerät nach einem der vorhergehenden Ansprüche, **dadurch gekennzeichnet, dass** das Zwischenglied eine biegsame Welle (17) ist, dass das Zwischenglied (17) im wesentlichen nur im Bereich des Stelllagers (10) sowie des Arbeitskopfes (3) vorgesehen ist, und dass das Zwischenglied (17) mit seinen Enden (18, 28) unmittelbar in Lagem (19, 21) der beiden Lagerteile (8, 9) gelagert bzw. zwischen den Enden in jeder Stell-Lage gekrümmt ist.

7. Arbeitsgerät nach einem der vorhergehenden Ansprüche, **dadurch gekennzeichnet, dass** das Zwischenglied (17) mit zwei gegeneinander verstellbaren Enden (18, 28) versehen ist, deren Mittelachse (54, 51) in einem Schnittbereich (56) eine größte gegenseitige Annäherung und eine größte Annäherung zur Schwenkachse (11) des Stelllagers (10) aufweisen, dass die Schwenkachse (11) in der einspringenden Winkelzone der beiden Mittelachsen (51, 54) im Bereich eines Krümmungsabschnittes des Zwischengliedes (17) liegt, und dass in Axialansicht auf die Schwenkachse (11) die Mittelachse des Krümmungsabschnittes in dessen am stärksten gestreckten Stellung zwischen der Schwenkachse (11) und dem Schnittbereich (56) und in seiner am stärksten gekrümmten Stellung auf der vom Schnittbereich (56) abgekehrten Seite der Schwenkachse (11) liegt.

8. Arbeitsgerät nach einem der vorhergehenden Ansprüche, **dadurch gekennzeichnet, dass** eine an dem Träger (2) im Abstand vom Arbeitskopf (3) vorgesehene Griff-Anordnung (40) mit mindestens einem Führungsgriff (38, 39) zur Führung des Arbeitskopfes (3) im Arbeitsbetrieb in ihrer Lager gegenüber der Verbindung (10) zwischen Träger (2) und Arbeitskopf (3) veränderbar ist.

9. Arbeitsgerät nach Anspruch 8, **dadurch gekennzeichnet, dass** die Griff-Anordnung (40) im Bereich eines Motors (14) an den Träger (2) anschließt, dass der Motor (14) in einem die Griff-Anordnung (40) tragenden Schutzgehäuse (30) angeordnet ist, und dass das Schutzgehäuse gegenüber dem Motor (14) und der Antriebsverbindung (15) zur Längenänderung des Trägers (2) bewegbar und um die Trägerachse (51) schwenkbar sowie festsetzbar ist.

10. Arbeitsgerät nach Anspruch 8 oder 9, **dadurch gekennzeichnet, dass** die Griff-Anordnung (40) zur manuellen Führung des Arbeitsgerätes (1) beim Werkzeug-Einsatz zwei auf derselben Seite des Trägers (2) liegende Griffe (38, 39) für beide Hände der Bedienungsperson aufweist, dass ein erster Griff (38) unmittelbar am Träger (2) starr befestigt ist sowie den zweiten Griff (39) frei trägt, und dass mindestens ein Griff (38, 39) durch einen Rahmenabschnitt eines im wesentlichen geschlossenen Rahmens (41, 42) gebildet und gegenüber dem anderen Griff (39, 38) verstellbar ist.

11. Arbeitsgerät nach einem der Ansprüche 8 bis 10, **dadurch gekennzeichnet, dass** die Griff-Anordnung (40) zum freien Tragen und Schwenken des Arbeitskopfes (3) eine Baueinheit mit einem Gehäuse (30) bildet, das gegenüber dem oberen Ende der Antriebsverbindung (15) verstellbar ist, dass das Gehäuse (30) mit einem Griff (38) das vom Arbeitskopf (3) entfernte Ende (37) des Arbeitsgerätes (1) bildet, und dass der Griff (38) wenigstens teilweise einteilig mit dem Gehäuse (30) ausgebildet ist.

12. Arbeitsgerät nach einem der Ansprüche 8 bis 11, **dadurch gekennzeichnet, dass** der Träger (2) einen Griffkopf (4) und einen an diesen axial anschließenden Stiel (5) in Form eines die Antriebsverbindung (15) aufnehmenden sowie den Arbeitskopf (3) mit dem Griffkopf (4) verbindenden Tragrohres (53) aufweist, dass der gegenüber mindestens einem Griff (38 bis 40) eine größere Axialerstreckung aufweisende Griffkopf (4) auf dem Tragrohr (53) stufenlos verschiebbar und drehbar sowie mit einer unmittelbar am Mantel des Tragrohres (53) angreifenden Klemmvorrichtung (32) festsetzbar, und dass das Tragrohr (53) zwischen dem Griffkopf (4) und einem zugehörigen Lagerteil (8, 9) eine steife Verbindung bildet.

## Claims

1. An implement, more particularly a trimmer/edger, including a workhead (3) for mounting a tool (20) defining a workplane (52) arranged on a support (2) and a drive connection (15) extending from said support (2) to said workhead (3) for the latter, said drive connection (15) comprising a link (17) with a connection (10) provided between said support (2) and said workhead (3), **characterized in that** said connection comprises a positioning mount (10) mounting said workhead (3) on said support (2) with two separate first and second mounting members (8,9) and that said first and second mounting members (8,9) directly interengage mutually about a pivot axis (11) and are mutually definable in each set position.

2. The implement as set forth in claim 1, **characterized in that** said workhead (3) for setting in various positions is rigidly connected to said support (2) in at least one position via said mounting members (8,9) and that said mounting members (8,9) define a sole pivot axis (11).

3. The implement as set forth in claim 1 or 2, **characterized in that** said support (2) in adjoining said workhead (3) and in adjoining a fastening member for a motor (14) is configured substantially flexurally rigid up to the corresponding first mounting member (8), that said second mounting member (9) is permanently rigidly connected to a mounting fixture of a toolmount (21) and that said pivot axis (11) is oriented roughly parallel to said workplane (52) as well as approximately at right angles to the longitudinal centerline of said support (2).

4. The implement as set forth in any of the preceding claims, **characterized in that** said flexible link (17) is configured pliant, that said link (17) bridges said positioning mount (10) and that said link (17) is located substantially in each position in the region of said pivot axis (11).

5. The implement as set forth in any of the preceding claims, **characterized in that** a lock (23) is provided for said positioning mount (10) in the region thereof, that a locking member (25) is mounted on said second mounting member (9) as well as directly engaging said first mounting member (8) and that said lock (23) is actuatable by a pedal (27).

6. The implement as set forth in any of the preceding claims, **characterized in that** said link (17) is a flexible shaft, that said link (17) is provided substantially only in the region of said positioning mount (10) as well as of said workhead (3) and that said link (17) is mounted by its ends (18, 28) directly in mounting bearings (19, 21) of said two mounting parts (8, 9) or is curved between the ends in each set position.

7. The implement as set forth in any of the preceding claims, **characterized in that** said link (17) is provided with two mutually adjustable ends (18, 28), the longitudinal centerline (54, 51) of which is located in a cutting zone (56) most approximate mutually and most approximate to said pivot axis (11) of said positioning mount (10), that said pivot axis (11) is located in the inwardly jutting angular zone of said two longitudinal centerlines (51, 54) in the region of a curvature section of said link (17), and that in an axial view of said pivot axis (11) said longitudinal centerline of said curvature section in its most extended position between said pivot axis (11) and said cutting zone (56) and in its most curved position is located on the side of said pivot axis (11) facing away from said cutting zone (56).

8. The implement as set forth in any of the preceding claims, **characterized in that** a handle assembly (40) provided on said support (2) spaced away from said workhead (3) is adjustable by means of at least one grip (38, 39) for guiding said workhead (3) in working operation in its location relative to said positioning mount (10) between said support (2) and workhead (3).

9. The implement as set forth in claim 8, **characterized in that** said handle assembly (40) in the region of a motor (14) adjoins said support (2), that said motor (14) is arranged in a guard housing (30) carrying said handle assembly (40), and that said guard housing (30) is movable relative to said motor (14) and said drive connection (15) for changing the length of said support (2) and is pivotable as well as fixedly locatable about said supporting axis (51).

10. The implement as set forth in claim 8 or 9, **characterized in that** said handle assembly (40) comprises for manually guiding said implement (1) on employing said tool two handle grips (38, 39) located on the same side of said support (2) for both hands of the operator, that a first grip (38) is rigidly secured directly to said support (2) on freely supporting said second grip (39) and that at least one grip (38, 39) is formed by a frame section of a substantially closed frame (41, 42) and is adjustable relative to said other grip (39, 38).

11. The implement as set forth in any of the claims 8 to 10, **characterized in that** for freely carrying and pivoting said workhead (3) said handle assembly (40) forms a unit with a housing (30) adjustable relative to the upper end of said drive connection (15), that said housing (30) forms with a grip (38) the end (37) of said implement (1) remote from said workhead (3) and that said grip (38) is configured at least in part integrally with said housing (30).

12. The implement as set forth in any of the claims 8 to 11, **characterized in that** said support (2) comprises a grip head (4) and a long handle (5) adjoining the latter axially in the form of a tubular support (53) mounting said drive connection (15) as well as connecting said workhead (3) to said grip head (4), that said grip head (4) features a greater axial extent relative to at least one grip (38 to 40) is continually shiftable and rotatable on said tubular support (53) as well as fixedly locatable by means of a clamping device (32) directly engaging the shell of said tubular support (53) and that said tubular support (53) forms a rigid connection between said grip head (4) and a mounting part (8, 9) belonging thereto.

## Revendications

1. Instrument de travail, notamment débroussailleuse, avec une tête de travail (3) disposée sur un support (2), pour le logement d'un outil (20) définissant un plan de travail (52) et avec un raccord de transmission (15) pour la tête de travail (3), lequel s'étend du support (2) jusqu'à la tête de travail, raccord comprenant un élément intermédiaire (17), un raccord (10) étant prévu entre le support (2) et la tête de travail (3), **caractérisé en ce que** le raccordement comprend un palier de réglage (10) qui loge la tête de travail (3) auprès du support (2) avec deux éléments de logement (8, 9) individuels premiers et deuxièmes, et **en ce que** les premiers et deuxièmes éléments de logement (8, 9) s'engagent directement l'un dans l'autre en étant mobiles l'un par rapport à l'autre autour d'un axe de pivotement (11) et qu'ils peuvent être fixés l'un par rapport à l'autre dans la position respectivement ajustée.

2. Instrument de travail d'après la revendication 1, **caractérisé en ce que** la tête de travail (3), laquelie peut être transportée en différentes positions, est raccordée au moyen des éléments de logement (8, 9) au moins dans une position de manière rigide avec le support (2), et **en ce que** les éléments de logement (8, 9) définissent un seul axe de pivotement (11).

3. Instrument de travail d'après la revendication 1 ou 2, **caractérisé en ce que** le support (2) à la suite de la tête de travail (3) et à la suite d'un élément de fixation pour un moteur (14) est réalisé de manière essentiellement rigide à la flexion jusqu'au premier élément de logement (8) correspondant, **en ce que** le deuxième élément de logement (9) est raccordé de manière rigide en permanence avec un support de logement d'un logement d'outil (21), et **en ce que** l'axe de pivotement (11) s'étend à peu près parallèlement par rapport au plan de travail (52) ainsi qu'à peu près orthogonalement par rapport à l'axe longitudinal du support (2).

4. Instrument de travail d'après une des revendications précédentes, **caractérisé en ce que** l'élément intermédiaire (17) élastique est réalisé de manière résiliente, **en ce que** l'élément intermédiaire (17) passe par-dessus le palier de réglage (10), et **en ce que** l'élément intermédiaire (17) se trouve dans le domaine de l'axe de pivotement (11) essentiellement dans tous les positionnements.

5. Instrument de travail d'après une des revendications précédentes, **caractérisé en ce qu'**un moyen de verrouillage (23) est prévu pour le palier de réglage (10) dans le domaine de celui-ci, **en ce qu'**un élément de verrouillage (25) est logé auprès du deuxième élément de logement (9) ainsi qu'il s'engage directement dans le premier élément de logement (8), et **en ce que** le moyen de verrouillage (23) peut être actionné au moyen d'un levier (27).

6. Instrument de travail d'après une des revendications précédentes, **caractérisé en ce que** l'élément intermédiaire est un arbre (17) flexible, **en ce que** l'élément intermédiaire (17) est prévu en substance uniquement dans le domaine du palier de réglage (10) ainsi que de la tête de travail (3), et **en ce que** l'élément intermédiaire (17) est logé avec ses extrémités (18, 28) directement dans des paliers (19, 21) des deux éléments de logement (8, 9) ou encore qu'il est courbé entre les extrémités dans tous les positionnements de réglage.

7. Instrument de travail d'après une des revendications précédentes, **caractérisé en ce que** l'élément intermédiaire (17) est pourvu de deux extrémités (18, 28) ajustables l'une par rapport à l'autre, dont les axes médians (54, 51) présentent dans un domaine d'intersection (56) une approche maximale l'un par rapport à l'autre et une approche maximale par rapport à l'axe de pivotement (11) du palier de réglage (10), **en ce que** l'axe de pivotement (11) se trouve dans la zone d'angle rentrante des deux axes médians (51, 54) dans le domaine d'une section de courbure de l'élément intermédiaire (17), et **en ce qu'**en projection axiale sur l'axe de pivotement (11) l'axe médian de la section de courbure dans son positionnement le plus allongé se trouve entre l'axe de pivotement (11) et le domaine d'intersection (56) et qu'il se trouve du côté opposé au domaine d'intersection (56) de l'axe de pivotement (11) dans son positionnement le plus courbé.

8. Instrument de travail d'après une des revendications précédentes, **caractérisé en ce qu'**une configuration de poignée (40) prévue au support (2) avec un écart de la tête de travail (3), avec au moins une poignée de guidage (38, 39) pour le guidage de la tête de travail (3) pendant le service est variable dans son positionnement par rapport au raccord (10) entre le support (2) et la tête de travail (3).

9. Instrument de travail d'après la revendication 8, **caractérisé en ce qu'**une configuration de poignée (40) fait la suite à un support (2) dans le domaine d'un moteur (14), **en ce que** le moteur (14) est disposé dans un carter de protection (30) portant la configuration de poignée (40), et **en ce que** le carter de protection est mobile par rapport au moteur (14) et par rapport au raccord de transmission (15) pour une modification de la longueur du support (2), pivotable autour de l'axe de support (51) ainsi qu'il peut être fixé.

10. Instrument de travail d'après la revendication 8 ou 9, **caractérisé en ce que** la configuration de poignée (40) pour le guidage manuel de l'instrument de travail (1) pendant le placement de l'outil présente deux poignées (38, 39) situées sur le même côté que le support (2) pour les deux mains de l'utilisateur, **en ce qu'**une première poignée (38) est fixée de manière rigide directement au support (2) ainsi qu'elle porte librement la deuxième poignée (39), et **en ce qu'**au moins une poignée (38, 39) est formée au moyen d'une section de châssis d'un châssis (41, 42) essentiellement clos et qu'elle est ajustable par rapport à l'autre poignée (39, 38).

11. Instrument de travail d'après la revendication de 8 à 10, **caractérisé en ce qu'**une configuration de poignée (40) forme, pour porter et pivoter librement la tête de travail (3), une unité constructive avec le boîtier (30), lequel est réglable par rapport à l'extrémité supérieure du raccord de transmission (15), **en ce que** le boîtier (30) forme avec une poignée (38) l'extrémité (37) de l'instrument de travail (1) écartée de la tête de travail (3), et **en ce que** la poignée (38) est réalisée au moins en partie d'une seule pièce avec le boîtier (30).

12. Instrument de travail d'après une des revendications de 8 à 11, **caractérisé en ce que** le support (2) présente une tête de poignée (4) et un manche (5) faisant axialement la suite à celui-ci, en forme d'un tuyau portant (53) logeant le raccord de transmission (15) ainsi que raccordant la tête de travail (3) avec la tête de poignée (4), **en ce que** la tête de poignée (4), présentant une étendue axiale plus grande par rapport au moins à une poignée (de 38 à 40), est décalable et orientable de manière progressive et continue sur le tuyau portant (53) ainsi qu'elle peut être fixée avec un moyen de serrage (32), s'engageant directement auprès de l'enveloppe du tuyau portant (53), et **en ce que** le tuyau portant (53) forme un raccord rigide entre la tête de poignée (4) et un élément de logement (8, 9) correspondant.
